# EUROPÄISCHE PATENTSCHRIFT

(11) **EP 2 794 707 B1**
(45) Veröffentlichungstag und Bekanntmachung des Hinweises auf die Patenterteilung: **14.06.2017**
(21) Anmeldenummer: 12810216.7
(22) Anmeldetag: 18.12.2012
(51) Int. Cl.: C08G 18/10, C08G 18/76, C08G 18/80, C09J 175/04

(54) **NIEDRIGVISKOSE REAKTIVE POLYURETHAN-ZUSAMMENSETZUNGEN**
LOW-VISCOSITY REACTIVE POLYURETHANE COMPOUNDS
COMPOSITIONS DE POLYURÉTHANE RÉACTIVES PEU VISQUEUSES

(30) Priorität: 23.12.2011 DE 102011089783
(43) Veröffentlichungstag der Anmeldung: 29.10.2014
(73) Patentinhaber: Covestro Deutschland AG, 51373 Leverkusen (DE)
(72) Erfinder: WINTERMANTEL, Matthias, 50354 Hurth (DE); MAYER, Eduard, 41539 Dormagen (DE); REICHERT, Peter, 41541 Dormagen (DE)
(74) Vertreter: Levpat
(86) Internationale Anmeldenummer: PCT/EP2012/075917
(87) Internationale Veröffentlichungsnummer: WO 2013/092564

(56) Entgegenhaltungen:
- EP-A1- 1 619 215
- WO-A1-01/40342
- US-A- 4 118 411

## Beschreibung

Die vorliegende Erfindung betrifft ein Verfahren zu Herstellung niedrigviskoser reaktiver Polyurethanzusammensetzungen sowie deren Verwendung in reaktiven ein- und zweikomponentigen Kleb-/Dichtstoffen, reaktiven Schmelzklebstoffen, Montageschäumen, Vergussmassen sowie in Weich-, Hart- und Integralschäumen.

Reaktive Polyurethane verfügen über reaktive Endgruppen, die mit Wasser oder anderen Verbindungen, die über ein acides Wasserstoffatom verfügen, reagieren können. Diese Form der Reaktivität ermöglicht es, die reaktiven Polyurethane in verarbeitbarem Zustand (in der Regel flüssig bis hochviskos) in der gewünschten Art an den gewünschten Ort zu bringen und durch die Zugabe von Wasser oder anderen Verbindungen, die über ein acides Wasserstoffatom verfügen (in diesem Fall als Härter bezeichnet) auszuhärten.

Bei diesen sogenannten 2K-Systemen erfolgt die Zugabe des Härters in der Regel unmittelbar vor der Applikation, im Normalfall mit Hilfe eines Misch- und Dosiersystems, wobei dem Verarbeiter nach der Härterzugabe nur noch eine begrenzte Verarbeitungszeit zur Verfügung steht.

Es ist jedoch ebenfalls möglich, Polyurethane mit reaktiven Endgruppen ohne Zugabe von Härtern alleine durch die Reaktion mit Luftfeuchtigkeit auszuhärten (1K-Systeme). Solche 1K-Systeme weisen gegenüber den 2K-Systemen in der Regel den Vorteil auf, dass für den Anwender das oft lästige Mischen der häufig viskosen Komponenten vor der Applikation entfällt.

Zu den üblicherweise in 1K-oder 2K-Systemen eingesetzten Polyurethanen mit reaktiven Endgruppen zählen beispielsweise die Polyurethane mit bevorzugt endständigen Isocyanat (NCO)-Gruppen.

Um Polyurethane mit endständigen NCO-Gruppen zu erhalten, ist es üblich, polyfunktionelle Alkohole mit einem Überschuss an monomeren Polyisocyanaten, in der Regel Diisocyanate, zur Reaktion zu bringen.

Es ist bekannt, dass am Ende der Umsetzung, unabhängig von der Reaktionszeit, eine gewisse Menge des im Überschuss eingesetzten monomeren Diisocyanats übrig bleibt.

Störend wirkt sich ein Gehalt an monomerem Diisocyanat beispielsweise bei der Verarbeitung von reaktiven ein- und zweikomponentigen Kleb-/Dichtstoffen, reaktiven Schmelzklebstoffen, Montageschäumen, Vergussmassen sowie in Weich-, Hart- und Integralschäumen aus.

Schon bei Raumtemperatur können Diisocyanate, wie IPDI oder TDI, einen nicht zu vernachlässigen Dampfdruck aufweisen. Dieser merkliche Dampfdruck ist insbesondere bei einem Sprühauftrag gravierend, da hierbei signifikante Mengen an Isocyanatdämpfen über dem Applikationsgerät auftreten können, die wegen ihrer reizenden und sensibilisierenden Wirkung toxisch sind.; Während Dichtstoffe üblicherweise bei Raumtemperatur verarbeitet werden, findet die Verarbeitung von Klebstoffen häufig bei erhöhter Temperatur statt. So liegen die Verarbeitungstemperaturen von Schmelzklebstoffen zwischen 100°C bis 200°C, die von Kaschierklebstoffen zwischen 30°C und 150°C. Bei diesen Temperaturen und weiteren spezifischen Anwendungsparametern, wie z.B. Luftfeuchtigkeit, bilden beispielsweise die weitverbreiteten bicyclischen Diisocyanate, insbesondere Diphenylmethandiisocyanate, gas- und aerosolförmige Emissionen. Seitens des Anwenders werden daher aufwendige Maßnahmen zum Schutz der das Produkt verarbeiteten Personen, insbesondere aufwendige Maßnahmen zur Einhaltung der Atemluft, gesetzlich vorgegeben durch die höchstzulässige Konzentration von Arbeitsstoffen von Gas, Dampf oder Schwebstoff am Arbeitsplatz jährlich aktualisierte MAK-Wert-Liste der technischen Regel TRGS 900 des Bundesministeriums für Arbeit und Soziales).

Da Schutz- und Reinigungsmaßnahmen in der Regel mit hohen finanziellen Investitionen oder Kosten verbunden sind, besteht seitens der Anwender ein Bedürfnis nach Produkten, die einen möglichst niedrigen Anteil an monomeren Diisocyanaten aufweisen.

Aber nicht nur die Anwendung von Reaktivklebstoffen, die noch monomeres Polyisocyanat enthalten, führt zu Problemen, sondern bereits auch das Inverkehrbringen. So müssen seit dem 01.12.2010 Stoffe und Zubereitungen, die mehr als 1,0 % freies MDI enthalten, zusätzlich mit dem R-Satz R40 (Verdacht auf krebserzeugende Wirkung) gekennzeichnet werden.

Das Vorhandensein von monomeren, nicht umgesetzten Ausgangs-Diisocyanat führt auch in der Weiterverarbeitung häufig zu Problemen. So können monomere Diisocyanate aus der Beschichtung oder Verklebung in die beschichteten oder verklebten Materialien hinein "wandern". Solche wandernden Bestandteile werden in Fachkreisen häufig als "Migrate" bezeichnet. Durch Kontakt mit Feuchtigkeit werden die Isocyanatgruppen der Migrate kontinuierlich zu Aminogruppen und weiteren Metaboliten umgesetzt.

In Polyurethan-Integralschäumen, die beispielsweise bei der Herstellung von Lenkrädern in Kraftfahrzeugen verwendet werden, sind diese Migrate unerwünscht, da ein Kontakt der aus den migrierten Diisocyanaten entstandenen Amine mit der Haut nicht auszuschließen ist.

Auch im Verpackungsbereich, speziell bei Lebensmittelverpackungen, sind Migrate unerwünscht. Einerseits kann die Wanderung der Migrate durch das Verpackungsmaterial hindurch zu einer Kontamination des verpackten Gutes führen, andererseits sind, abhängig von der Menge des migratfähigem freien monomeren Diisocyanates, lange Wartezeiten notwendig, bevor das Verpackungsmaterial "migratfrei" ist und verwendet werden darf.

Für die genannten Anwendungsfelder ist daher die Entwicklung von reaktiven Polyurethanen und darauf basierenden reaktiven ein- und zweikomponentigen Kleb-/Dichtstoffen, Montageschäumen, Vergussmassen sowie Weich-, Hart- und Integralschäume mit einem drastisch reduzierten Anteil an monomeren Diisocyanaten in hohem Maße wünschenswert.

Eine Möglichkeit reaktive Polyurethane mit einem reduzierten Anteil an monomeren Diisocyanaten herzustellen besteht darin, eine Diolkomponente mit einem stöchiometrischen Überschuss an monomerem Diisocyanat zu einem Prepolymeren umzusetzen und das Prepolymer anschließend durch Destillation oder durch Zugabe eines Nichtlösers für das hochmolekulare Diisocyanat vom monomeren Diisocyanat zu befreien.

Diese Vorgehensweise ist seit Jahrzehnten Stand der Technik. So beschreibt beispielsweise die EP-A 1 241 197 die Herstellung von Isocyanat funktionellen Prepolymeren mit niedrigem Restmonomergehalt unter Verwendung eines Kurzwegverdampfers. Bevorzugt Isocyanate sind TDI, MDI, XDI, HDI und IPDI. Der Nachteil dieser Verfahrensweise ist jedoch, dass neben der Herstellung des Prepolymers ein zusätzlicher aufwändiger Prozessschritt hinzukommt, nämlich die Abtrennung der überschüssigen monomeren Isocyanate bspw. durch Destillation. Dies führt zu erheblichem produktionstechnischem Aufwand und zu hohen Produktionskosten. Da für die unterschiedlichen Anwendungen jeweils chemisch unterschiedlich aufgebaute Prepolymere notwendig sind, muss jedes Endprodukt einzeln von den monomeren Isocyanaten befreit werden. Für MDI sind zur Zeit sogar nur Polyether basierte Produkte destillativ zugänglich, so dass gar nicht alle Anwendungen bedient werden können.

Deshalb beschreibt die WO 2001/040342 ein zweistufiges Verfahren zur Herstellung von Polyurethan-Zusammensetzungen mit einem niedrigen Gehalt an monomeren Diisocyanaten. Dabei wird in einem ersten Schritt eine Diolkomponente mit einem Molekulargewicht kleiner 2000 mit einem monomeren Diisocyanat mit einem Molekulargewicht kleiner als 500 umgesetzt. Aus diesem Umsetzungsprodukt wird das nicht umgesetzte monomere Diisocyanat z.B. destillativ entfernt. Das so entstandene hochmolekulare, monomerarme Diisocyanat kann dann quasi in einem zweiten Schritt als universelle Isocyanatkomponente mit weiterem Polyol umgesetzt, so dass ein reaktives Prepolymer mit Isocyanat-Endgruppen entsteht. Gemäß dieser Schrift eignen sich derartige Polyurethan-Zusammensetzungen zur Verwendung als Bindemittel für reaktive ein- oder zweikomponentige Kleb-/ Dichtstoffe, die ggf. Lösungsmittelhaltig sein können, weiterhin sollen sich diese Zusammensetzungen bei entsprechender Auswahl der Polyole zur Herstellung von reaktiven Schmelzklebstoffen eignen. Auch hier ist von Nachteil, dass ein aufwändiger Trennschritt (z.B. Destillation) zur Herstellung des hochmolekularen monomerenarmen Diisocyanats durchgeführt werden muss, was zu hohen Herstellkosten führt. Außerdem ist man bezüglich des möglichen NCO-Gehalts dieses Zwischenprodukts stark eingeschränkt. Im Falle des z.B. für reaktive Kleb- und Dichtstoffe technisch sehr wichtigen Diisocyanats MDI ergibt sich beispielsweise folgende Betrachtung: Verwendet man in der ersten Stufe das niedermolekularste verfügbare Diol Ethylenglykol (Molmasse 62 g/mol) und vernachlässigt jegliche Kettenverlängerung, d.h. führt die Reaktion mit einem unendlichen Überschuss an MDI durch, so erhält man ein Produkt mit einem NCO-Gehalt von 14,95 Gew.-%. Dieser Wert stellt quasi die theoretisch erreichbare obere Grenze des NCO-Gehalts dar. In der Praxis wird die erste Stufe bei einem 5 bis 10 fachen MDI-Überschuss durchgeführt. Bei höheren Überschüssen verbleibt am Ende der Reaktion zu viel nicht umgesetztes monomeres Diisocyanat im Produkt das abdestilliert werden muss. Dies ist zum einen unwirtschaftlich, zum anderen führt die dann notwendige lange Destillationsdauer zu einer Produktschädigung durch unerwünschte Nebenreaktionen (z.B. Viskositätserhöhung, höherer Restmonomergehalt). Führt man die Umsetzung des Ethylenglykols mit einem technisch sinnvollen 5 bis 10 fachen MDI-Überschuss durch, so kann ein Produkte mit einem NCO-Gehalt von ca. 13 - 14 Gew.-% hergestellt werden. Dies stellt quasi die technisch machbare obere Grenze für den NCO-Gehalt der ersten Stufe dar. Ausserdem weisen diese Zwischenprodukte hohe Viskositäten auf, bzw. sind wie im Fall des Ethylenglykols sogar bei Raumtemperatur Feststoffe. Dadurch lassen sie sich nur sehr schwer handhaben. Die in der zweiten Stufe hergestellten Endprodukte weisen ebenfalls deutlich höhere Viskositäten auf als in einem direkten einstufigen Verfahren hergestellte Prepolymere. Dadurch ist ihre Verwendung ebenfalls eingeschränkt.

Eine weitere Möglichkeit zur Herstellung von monomerenarmen Prepolymeren besteht in der Verwendung von sogenannten asymmetrischen Diisocyanaten. Dabei handelt es sich um Diisocyanate mit unterschiedlich reaktiven NCO-Gruppen.

So sind beispielsweise aus der WO 1993/009158 NCO-Endgruppen tragende Prepolymere bekannt, welche vorzugsweise als Isocyanatkomponente 2,4-TDI, MDI mit wenigstens 90 Gew.-% 2,4'-MDI und/oder IPDI enthalten. Aus den Beispielen ist zu entnehmen, dass die Produkte zwar niedrige Gehalte an monomeren Diisocyanaten aufweisen (< 1 Gew.-%) jedoch aufgrund des dazu notwendigen niedrigen NCO/OH-Verhältnisses (Index) die Viskositäten dieser Prepolymere extrem hoch sind. So weisen die 2,4'-MDI basierten Prepolymere (Beispiele B und D) Viskositäten oberhalb von 80000 mPas bei 50 °C auf. Solche Produkte sind aufgrund ihrer hohen Viskositäten nur eingeschränkt nutzbar. Ein weiterer Nachteil besteht darin, dass 2,4'-MDI bei Raumtemperatur als Feststoff vorliegt und bei dieser Temperatur eine hohe Dimerisierungsrate aufweist, woraus sich eine schlechte Lagerstabilität ergibt. Deshalb muss das 2,4'-MDI tiefgekühlt gelagert und transportiert werden. Dies ist nachteilig und führt zu hohen Logistikkosten.

In WO 2003/006521 werden monomerenarme NCO-gruppenhaltige Prepolymere beschrieben, die durch Umsetzung von asymmetrischen Diisocyanaten und Polyolen mit Molekulargewichten ≤ 2000 g/mol herstellbar sind. Als ein Beispiel für die asymmetrischen Diisocyanate wird MDI mit 2,4'-MDI-Anteilen größer 97,5 Gew.-% genannt. Bei der Umsetzung soll das Verhältnis von Isocyanatgruppen zu Hydroxylgruppen (Index) im Bereich von 1,05 zu 1 bis 2,0 zu 1 liegen und die Endprodukte sollen gemäß dem ersten Anspruch NCO-Gehalte zwischen 4 und 12 Gew.-% aufweisen. Durch die Verwendung der kurzkettigen Polyole und des Index < 2 sind diese Produkte insbesondere bei niedrigen Temperaturen sehr hochviskos und dadurch in der Verwendung stark eingeschränkt. Auch hier ergibt sich für den Hersteller das Problem, dass das monomere 2,4'-MDI tiefgekühlt gelagert bzw. transportiert werden muss um eine Dimerisierung zu verhindern. In Beispiel 2 wird zusätzlich die Umsetzung der oben beschriebenen Prepolymere mit weiteren Polyolen (Polyesterpolyol) zu einem NCO-Gruppen haltigen Endprodukt beschrieben. Diese sind allerdings ebenfalls sehr hochviskos bzw. bei Raumtemperatur fest und damit mit Ausnahme der Schmelzklebstoffe praktisch unbrauchbar.

Die WO 2003/055929 beschreibt NCO-gruppenhaltige Prepolymere sowie deren Herstellung, bei denen als Isocyanatkomponente eine Mischung aus asymmetrischen Diisocyanaten, bevorzugt 2,4'-MDI, und hochmolekularen monomerenarmen Diisocyanaten Verwendung findet. Die hochmolekularen monomerenarmen Diisocyanate können beispielsweise gemäß der Lehre der o.g. WO 01/40342 hergestellt werden, d.h. die Herstellung beinhaltet zwangsläufig eine technisch aufwändigen und deshalb nachteiligen Schritt zur Abtrennung monomerer Diisocyanate (z.B. Destillation).

WO 2003/051951 offenbart ein zweistufiges Verfahren zur Herstellung von monomerenarmen und niedrigviskosen Prepolymeren, bei dem zunächst ein asymmetrisches Diisocyanat mit einem Polyol mit einem mittleren Molekulargewicht von 60 - 3000 g/mol bei einem Verhältnis von Isocyanatgruppen zu Hydroxylgruppen (Index) im Bereich von 1,2 zu 1 bis 4 zu 1 unter zwingender Verwendung eines Katalysators zu einem NCO-funktionellen Prepolymer umgesetzt wird. Dieses wird anschließend in einer zweiten Synthesestufe mit mindestens einem weiteren Polyol zur Reaktion gebracht. In den Beispielen wird lediglich TDI und IPDI verwendet, während Produkte auf der Basis von 2,4'-MDI nicht beschrieben sind. Das einzige nicht erfindungsgemäße Vergleichsbeispiel (Beispiel 5), bei dem das zweistufige Verfahren ohne Verwendung eines Katalysators durchgeführt wurde, zeigt im Vergleich zu dem dazugehörigen Beispiel 4 mit Verwendung eines Katalysators, dass mit dem erfindungsgemäßen Verfahren zwar eine Reduktion des Restmonomerengehalts 0,55 Gew.-% auf 0,03 Gew.-% erzielt wird allerdings steigt die Viskosität dabei drastisch an. Während das Prepolymer des Vergleichsbeispiels (Beispiel 5) eine Viskosität von 3250 mPas bei 40 °C aufweist, hat das erfindungsgemäße Produkt aus Beispiel 4 eine um den Faktor 10 höhere Viskosität von ca. 30000 mPas bei 40 °C. D.h. das in dieser Anmeldung beschriebene 2-stufige Verfahren ist nicht geeignet Prepolymere mit reduziertem Gehalt an monomeren Diisocyanaten bei gleichzeitig niedriger Viskosität zu liefern. Ein Vergleich zu einer einstufigen direkten Herstellung der Prepolymere ist dort nicht gezeigt.

Die WO 2003/033562 beschreibt bei Raumtemperatur feste reaktive Klebstoffzusammensetzungen auf Basis von 2,4'-MDI. Diese sind mit Ausnahme als Schmelzklebstoffe praktisch unbrauchbar. Auch hier ergibt sich für den Hersteller das Problem, dass das monomere 2,4'-MDI tiefgekühlt gelagert bzw. transportiert werden muss um eine Dimerisierung zu verhindern.

Die DE-C 16 18 380 beschreibt ein Verfahren zur Herstellung eines bei Raumtemperatur flüssigen MDI-Derivats dadurch gekennzeichnet, dass man 4,4'-MDI und/oder 2,4'-MDI mit Tripropylenglykol oder kurzkettigen Polyetherpolyolen mit Molmassen < 700 g/mol umsetzt. Ein solches Produkt auf Basis von 2,4'-MDI ist jedoch am Markt nicht verfügbar. Das Dokument EP 1 619 215 A1 offenbart niedrigviskose, monomerarme feuchtigkeitshärtende Dichtstoffe auf Basis von 2,4'-MDI-Prepolymeren, ein Verfahren zur Herstellung sowie ihre Verwendung. Im Beispiel 6 wird die Herstellung eines NCO-terminierten Prepolymers aus 2,4'-MDI (99,92%) und einem Polyether C (Molmasse 4007 g/mol) bei einem Verhältnis von 1,58:0,25. Der NCO-Gehalt beträgt 7,58%. Dann wird in einer zweiten Stufe das NCO-terminierte Prepolymer mit weiteren Polyolen zur Reaktion gebracht. Trotz des Stands der Technik besteht weiterhin der Bedarf an reaktiven NCO-Endgruppen tragenden Polyurethanen mit einem reduzierten Anteil an monomeren Diisocyanaten die aber gleichzeitig auch niedrige Viskositäten aufweisen und somit für eine breites Anwendungsspektrum geeignet und außerdem insbesondere bei Raumtemperatur einfach zu verarbeiten sind.

Es wurde nun überraschenderweise gefunden, dass man reaktiven NCO-Endgruppen tragende Polyurethane mit einem niedrigen Anteil an monomeren Diisocyanaten mit gleichzeitig niedrigen Viskositäten herstellen kann, indem man diese nicht direkt, d.h. einstufig (siehe Vergleichsbeispiel 2), sondern in einem zweistufigen Verfahren (siehe Beispiel 1) herstellt. Dazu wird in einem ersten Schritt 2,4'-MDI bei einem Verhältnis von Isocyanatgruppen zu Hydroxylgruppen (Index) von größer 4 zu 1 mit kurzkettigen Polyolen umgesetzt. Das so erhaltene flüssige Zwischenprodukt weist bei Raumtemperatur eine gute Lagerstabilität auf und lässt sich einfach transportieren und handhaben. Dieses Zwischenprodukt wird direkt oder zu einem späteren Zeitpunkt mit weiteren Polyolen zum eigentlichen Endprodukt umgesetzt.

Gegenstand der Erfindung ist daher ein Verfahren zur Herstellung von reaktiven NCO-Endgruppen tragenden 2,4'-MDI basierten Prepolymeren mit einem reduzierten Gehalt an monomeren Diisocyanaten und gleichzeitig niedrigen Viskositäten dadurch gekennzeichnet, dass man
A) in einer ersten Synthesestufe ein bei Raumtemperatur flüssiges NCO-terminiertes Prepolymer mit einem NCO-Gehalt > 15 Gew.-% herstellt durch Umsetzung von
   a1) 2,4'-MDI mit einem Gehalt von wenigstens 95 Gew.-% des 2,4'-Isomeren mit
   a2) mindestens einem Diol mit einer Molmasse von 62 g/mol bis 700 g/mol
      oder
      einer Mischung aus mono- und/oder di- und/oder höherfunktionellen OH-funktionellen Komponenten, die eine mittlere Funktionalität von ≥ 2,0 und eine zahlenmittlere Molmasse ≤ 700 g/mol aufweist
   a3) bei einem Verhältnis von Isocyanatgruppen zu Hydroxylgruppen (Index) von größer 4 zu 1
   a4) gegebenenfalls unter Verwendung eines Katalysators und
B) in einer zweiten Synthesestufe direkt oder zu einem späteren Zeitpunkt das
   b1) in der ersten Synthesestufe A) hergestellte bei Raumtemperatur flüssige Prepolymer mit
   b2) weiteren Polyolen
zum reaktive NCO-Endgruppen tragenden Polyurethan mit einem reduzierten Anteil an monomeren Diisocyanaten mit gleichzeitig reduzierter Viskosität umgesetzt wird. Die Viskosität der erfindungsgemäßen Prepolymere ist niedrig, so dass eine gute Handhabbarkeit gegeben ist. Sie beträgt vorzugsweise weniger als 30 000 mPas und besonders bevorzugt weniger als 25 000 mPas, bestimmt bei 40 °C mit Hilfe des Rheometers Physika MCR 51 der Fa. Anton Paar, Ostfildern, DE bei einer Scherrate von 40 1/s.

Das in der ersten Synthesestufe A) hergestellte bei Raumtemperatur flüssige Prepolymer weist einen NCO-Gehalt von 15,0 bis 28,0 Gew.-%, bevorzugt von 18,0 bis 26,0 Gew.-% und besonders bevorzugt von 21,5 bis 25,0 Gew.-% auf.

Das in der ersten Synthesestufe A) verwendete 2,4'-MDI a1) weist einen Gehalt des 2,4'-Isomeren von größer 95 Gew.-%, bevorzugt größer 97 Gew.-% und besonders bevorzugt größer 98 Gew.-% auf.

Das in der ersten Synthesestufe A) verwendete 2,4'-MDI a1) weist einen Gehalt des 2,2'-Isomeren von kleiner 1 Gew.-%, bevorzugt kleiner 0,5 Gew.-% und besonders bevorzugt kleiner 0,3 Gew.-% auf.

Als Diol a2) in der ersten Synthesestufe A) können beispielsweise kurzkettige difunktionelle Alkohole eingesetzt werden. Diese sind dem Fachmann aus der Polyurethanchemie an sich bekannt. Es können beispielsweise Ethylenglykol, 1,2-Propandiol, 1,3-Propandiol, 1,2-Butandiol, 1,3-Butandiol, 1,4-Butandiol und/oder Triproylenglykol eingesetzt werden.

Als bevorzugter kurzkettiger difunktioneller Alkohol wird Tripropylenglykol eingesetzt.

Als Diol a2) in der ersten Synthesestufe A) können auch beispielsweise difunktionelle Polyetherpolyole verwendet werden. Diese sind dem Fachmann aus der Polyurethanchemie an sich ebenfalls bekannt. Diese werden typischerweise ausgehend von niedermolekularen difunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt..

Geeignete Starter weisen 2 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A und Neopentylglykol.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugt werden in A) auf vorstehend genannten Startern basierende Polyether a2) mit Propylenoxid-, Ethylenoxid- und/oder Tetrahydrofuran-Einheiten besonders bevorzugt mit Propylenoxid- und/oder Ethylenoxid-Einheiten und ganz besonders bevorzugt mit Propylenoxid-Einheiten verwendet.

Die in der ersten Synthesestufe A) verwendeten difunktionellen Polyether a2) weisen Molmassen kleiner 700 g/mol, bevorzugt kleiner 500 g/mol und besonders bevorzugt von 200 bis 300 g/mol auf.

Die monofunktionellen Alkohole der Mischung aus mono- und/oder di- und/oder höherfunktionellen OH-funktionellen Komponenten a2) in der ersten Synthesestufe A) sind dem Fachmann aus der Polyurethanchemie an sich bekannt. Es können beispielsweise Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol verwendet werden.

Die höherfunktionellen Alkohole für die Mischung aus mono- und/oder di- und/oder höherfunktionellen OH-funktionellen Komponenten a2) in der ersten Synthesestufe A) sind dem Fachmann aus der Polyurethanchemie an sich bekannt. Es können beispielsweise Glycerin, Trimethylolethan, Trimethylolpropan, Ditrimethylolpropan, Butantriol, Pentaerythrit, Dipentaerythrit, Sorbit und Mannit eingesetzt werden.

Als di- und/oder höherfunktionelle OH-funktionelle Komponenten in der Mischung aus mono- und/oder di- und/oder höherfunktionellen OH-funktionellen Komponenten a2) in der ersten Synthesestufe A) können beispielsweise die dem Fachmann an sich bekannten dioder höherfunktionelle Polyetherpolyole eingesetzt werden. Sie werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt..

Geeignete Starter weisen bevorzugt 2 - 8, besonders bevorzugt 2 - 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugt werden als di- und/oder höherfunktionelle OH-funktionelle Komponenten a2) in der ersten Synthesestufe A) auf vorstehend genannten Startern basierende Polyether mit Propylenoxid-, Ethylenoxid- und/oder Tetrahydrofuran-Einheiten besonders bevorzugt mit Propylenoxid- und/oder Ethylenoxid-Einheiten verwendet.

Als Polyole b2) in der zweiten Synthesestufe B) sind beispielsweise die aus der PolyurethanChemie dem Fachmann an sich bekannten Polyetherpolyole und/oder Polycarbonatpolyole und/oder Polyesterpolyole und/oder OH-funktionelle Polybutadiene geeignet.

Die als Polyole b2) in der zweiten Synthesestufe B) geeigneten Polyetherpolyole sind dem Fachmann aus der Polyurethanchemie an sich bekannt. Sie werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt..

Geeignete Starter weisen bevorzugt 2 - 8, besonders bevorzugt 2 - 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugt werden als Polyole b2) in der zweiten Synthesestufe B) auf bevorzugt den vorstehend genannten Startern basierende Polyether mit Propylenoxid-, Ethylenoxid- und/- oder Tetrahydrofuran-Einheiten besonders bevorzugt mit Propylenoxid- und/oder Ethylenoxid-Einheiten verwendet.

Selbstverständlich können auch Füllstoffe enthaltende Polyether als Polyole b2) in der zweiten Synthesestufe B) eingesetzt werden. Diese sind dem Fachmann aus der Polyurethanchemie an sich bekannt. Beispiele sind Styrol-Acrylnitril (SAN) oder Polyharnstoff (PHD) als Füllstoff enthaltende Polyether die z.B. von der Bayer MaterialScience AG, Leverkusen, DE angeboten werden.

Die als Polyole b2) in der zweiten Synthesestufe B) geeigneten Polycarbonatpolyole, die im Wesentlichen linear sind und über mindestens zwei, bevorzugt endständige OH-Gruppen verfügen, können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Die als Polyole b2) in der zweiten Synthesestufe B) geeigneten Polyesterpolyole sind dem Fachmann aus der Polyurethanchemie an sich bekannt und weisen ein Molekulargewicht von etwa 200 bis etwa 10 000 g/mol, bevorzugt von etwa 1000 bis etwa 6000 g/mol auf. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignete Alkohole sind Hexandiol, Butandiol, Ethylenglykol, Diethylenglykol, Neopentylglykol, 3 Hydroxy-2,2-dimethylpropyl-3-hydroxy-2,2-dimethylpropanoat oder Trimethylolpropan oder Gemische aus zwei oder mehr davon. Besonders geeignete Säuren sind Phthalsäure, Isophthalsäure, Terephthalsäure, Adipinsäure oder Dodekandisäure oder deren Gemische.

Polyesterpolyole mit hohem Molekulargewicht umfassen beispielsweise die Umsetzungsprodukte von polyfunktionellen, bevorzugt difunktionellen Alkoholen (gegebenenfalls zusammen mit geringen Mengen an trifunktionellen Alkoholen) und polyfunktionellen, bevorzugt difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit bevorzugt 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Dodekandisäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet.

Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Selbstverständlich können auch Füllstoffe enthaltende Polyester als Polyole b2) in der zweiten Synthesestufe B) eingesetzt werden. Diese sind dem Fachmann aus der Polyurethanchemie an sich bekannt.

Die als Polyole b2) in der zweiten Synthesestufe B) geeigneten OH-funktionellen Polybutadiene sind dem Fachmann aus der Polyurethanchemie an sich bekannt und werden z.B. unter der Bezeichung "Poly-bd" vertrieben. Sie finden z.B. dann Verwendung, wenn die Prepolymere besonders hydrophobe Eigenschaften aufweisen sollen. Als beispielhafte Anwendung seien hier Bindemittel für Bitumenabmischungen für Nahtabdichtungen bei Flachdächern genannt.

Die Herstellung der NCO-Endgruppen aufweisenden Polyurethanprepolymere erfolgt in aus der Polyurethanchemie bekannter Art und Weise.

Die Herstellung erfolgt in einem zweistufigen Verfahren. Dabei werden in der ersten Synthesestufe A) das Polyol a2) oder eine Mischung der Polyole a2) mit einem Überschuss der Isocyanatkomponente a1) vermischt und die homogene Mischung bis zum Erhalt eines konstanten NCO-Wertes gerührt. Als Reaktionstemperatur werden 50 °C bis 120 °C, vorzugsweise 50 °C bis 100 °C gewählt. Bevorzugt sind beide Reaktionspartner bei der gewählten Reaktionstemperatur flüssig, so dass auf die Verwendung zusätzlicher Lösemittel zur Homogenisierung und Viskositätserniedrigung der Reaktionsmischung verzichtet werden kann.

Das in der ersten Synthesestufe A) hergestellte Prepolymer ist bei Raumtemperatur flüssig und kann entweder direkt in einer zweiten Synthesestufe B) weiter umgesetzt werden, oder aber es wird in geeignete Gebinde abgefüllt und zu einem späteren Zeitpunkt in einer zweiten Synthesestufe B) weiter umgesetzt.

In der zweiten Synthesestufe B) wird das Polyol b2) oder eine Mischung der Polyole b2) mit einem Überschuss des in der ersten Synthesestufe A) hergestellten Prepolymers b1) vermischt und die homogene Mischung bis zum Erhalt eines konstanten NCO-Wertes gerührt. Als Reaktionstemperatur werden 50 °C bis 120 °C, vorzugsweise 50 °C bis 100 °C gewählt. Bevorzugt sind das oder die Polyole wie auch das Reaktionsprodukt bei der gewählten Reaktionstemperatur flüssig, so dass auf die Verwendung zusätzlicher Lösemittel zur Homogenisierung und Viskositätserniedrigung der Reaktionsmischung verzichtet werden kann.

Zur Herstellung von reaktiven Polyurethan-Schmelzklebstoffe (PUR-Hotmelts) werden in der zweiten Synthesestufe B) Reaktionstemperaturen von 120 - 180 °C und bevorzugt 130 - 150 °C eingesetzt.

Selbstverständlich kann das zweistufige Verfahren oder eine der beiden Synthesestufen zur Herstellung der NCO-Endgruppen aufweisenden Polyurethanprepolymere auch kontinuierlich in einer Rührkesselkaskade oder geeigneten Mischaggregaten, wie beispielsweise schnelldrehenden Mischern nach dem Rotor-Stator-Prinzip, erfolgen.

Der NCO-Gehalt wird nach einem in der Polyurethanchemie üblichen NCO-titrimetrischen Verfahren bestimmt.

Gegebenenfalls können falls gewünscht bei der Prepolymerherstellung auch Katalysatoren zur Beschleunigung der NCO/OH-Reaktion und/oder Lösemittel zugesetzt werden.

Als Katalysatoren sind die aus der Polyurethanchemie an sich bekannten aminischen oder metallorganischen Verbindungen geeignet.

Beispielsweise können folgende Verbindungen als Katalysatoren verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin- 1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol, N,N',N-Tris-(dialkylaminoalkyl)hexahydrotriazine, z. B. N,N',N-Tris-(dimethylaminopropyl)- s-hexahydrotriazin, Eisen(II)-chlorid, Zinkchlorid, Bleioctoat und vorzugsweise Zinnsalze, wie Zinndioctoat, Zinndiethylhexoat, Dibuthylzinndilaurat und/oder Dibutyldilaurylzinnmercaptid, 2,3- Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat und/oder Alkalisalze von langkettigen Fettsäuren mit 10 bis 20 Kohlenstoffatomen und gegebenenfalls seitenständigen OH-Gruppen. Weiterhin haben sich als Katalysatoren Ti-Verbindungen, insbesondere Ti(IV)-O-Alkylverbindungen, mit Alkylgruppen wie Methyl, Ethyl, n-Propyl, Isopropyl, n-Butyl, Isobutyl, tert.-Butyl, n-Penty, 2-Pentyl, 3-Pentyl, bevorzugt Ethyl, n-Propyl, Isopropyl, n-Butyl, Isobutyl, tert.-Butyl und besonders bevorzugt Ti(IV)butylat, bewährt.

Ebenso eignen sich z.B. die metallorganischen Verbindungen des Zinns, Bleis, Eisens, Titans, Wismuts oder Zirkoniums, wie Tetraisopropyltitanat, Blei-Phenyl-Ethyl-Dithiocarbaminat, Zinn(II)salze von Carbonsäuren, z.B. Zinn-II-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(β-methoxycarbonyl-ethyl)zinndidodecylthiolat, Bis(β-acetyl-ethyl)zinn-bis(2-ethyl-hexylthiolat), Dibutyl- und Dioctylzinndidodecylthiolat, Butyl- und Octylzinn-tris(thioglykolsäure-2-ethylhexoat), Dibutyl- und Dioctylzinn-bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2- ethylhexoat) mit der allgemeinen Formel Rₙ₊₁Sn(SCH₂CH₂OCOC₈H₁₇)₃₋ₙ, wobei R eine Alkylgruppe mit 4 bis 8 C-Atomen ist, Bis(β-methoxycarbonyl-ethyl)zinn-bis(thioethylenglykol-2-ethylhexoat), Bis(β-methoxycarbonyl-ethyl)-zinn-bis(thioglykolsäure-2-ethylhexoat), und Bis(β-acetyl-ethyl)zinn- bis(thioethy-lenglykol-2-ethylhexoat) und Bis(β-acetylethyl)zinn-bis(thioglykolsäure-2-ethyl hexoat.

Als Bismut-organische Verbindungen werden insbesondere Bismut-Carboxylate eingesetzt, wobei die Carbonsäuren 2 bis 20 C-Atome, bevorzugt 4 bis 14-Atome, besitzen. Als Säuren seien ausdrücklich genannt: Buttersäure, Capronsäure, Caprylsäure, Caprinsäure, Laurinsäure, Myristinsäure, Palmitinsäure, Stearinsäure, Arachinsäure, Isobuttersäure sowie 2-Ethylhexansäure. Es können auch Mischungen von Bismutcarboxylaten mit anderen Metalicarboxylaten, beispielsweise Zinncarboxylaten eingesetzt werden.

Sollen Prepolymere mit besonders niedrigem Restgehalt an freiem MDI-Monomer bei gleichzeitig niedriger Viskosität hergestellt werden, so ist die Verwendung von Katalysatoren bevorzugt, wobei besonders bevorzugt metallorganische Verbindungen eingesetzt werden.

Falls Katalysatoren mit verwendet werden beträgt deren Menge bezogen auf die Gesamtmenge der in der ersten Synthesestufe umzusetzenden Komponenten a1) und a2) 0,01 bis 8 Gew.-%, bevorzugt 0,05 bis 5 Gew.-% und besonders bevorzugt 0,1 bis 3 Gew.-%.

Bevorzugte metallorganische Katalysatoren sind solche aus der Gruppe der Zinn(IV)-Verbindungen.

Bevorzugte Katalysatoren aus der Gruppe der Zinn(IV)-Verbindungen sind Dibutyl- und Dioctylzinndiacetat, -maleat, -bis-(2-ethylhexoat), -dilaurat, -dichlorid, -bisdodecylmercaptid, Tributylzinnacetat, Bis(β-methoxycarbonyl-ethyl)zinndilaurat und Bis(β-acetyl-ethyl)zinndilaurat.

Ganz besonders bevorzugt ist Dibutylzinndilaurat als metallorganischer Katalysator.

Zum Abstoppen der Reaktion kann gegebenenfalls eine mineralische oder organische Säure wie Salzsäure, Schwefelsäure, Phosphorsäure oder deren Derivate, Ameisensäure, Essigsäure oder einer anderen Alkan- oder organischen Säure oder einer säurefreisetzenden Komponente, wie etwa Säurehalogenide zugegeben werden. Beispiele für geeignete Säurechloride sind Ameisensäurechlorid, Essigsäurechlorid, Propionsäurechlorid, Isophthalsäuredichlorid, Terephthalsäuredichlorid und Benzoylchlorid. Das Abstoppen der Reaktion ist insbesondere vorteilhaft, wenn während der Prepolymerherstellung einer der oben genannten bekannten aminischen oder metallorganischen Katalysatoren mitverwendet wurde.

Die erfindungsgemäß erhältlichen Produkte weisen bevorzugt Restmonomergehalte an Methylendiphenyldiisocyanaten von weniger als 1,0 Gew.-%, besonders bevorzugt weniger als 0,3 Gew.-% und ganz besonders bevorzugt weniger als 0,1 Gew.-% bezogen auf das lösemittelfreie NCO-funktionelle Prepolymer auf.

Anwendungsbeispiele für die erfindungsgemäßen Polyurethan-Prepolymere sind der Einsatz in PUR-Schäumen, Beschichtungsmitteln, Lacken, Anstrichstoffen, Klebstoffen, Kaschiermaterialien, Dichtstoffen, Druckfarben, Tinten, Färbungsmitteln, Farbstoffen, Beizen, Korrosions- und Rostschutzmitteln, Imprägniermitteln und graphischen Materialien, zur Herstellung von Wundauflagematerialien und Inkontinenzprodukten, zur Herstellung pharmazeutischer Formulierungen, als Schmier-, Gleit-, Trenn- oder Kühlmittel, in Kraftstoffen, als Öl, in bzw. als Verdünnungs-, Reinigungs- bzw. Vorbehandlungsmittel.

Ein weiterer Gegenstand der Erfindung sind auch Polyurethankunststoffe, Beschichtungen, Verklebungen, Dichtungen, Vergussmassen, Druckerzeugnisse, Folienverbünde, Wundauflagematerialien, Inkontinenzprodukte, pharmazeutische Produkte, Schmier-, Gleit-, Trennoder Kühlmittel, Kraftstoffe, Öle, Verdünnungs-, Reinigungs- bzw. Vorbehandlungsmittel und Schaumstoffe hergestellt unter Verwendung der erfindungsgemäß erhältlichen Prepolymere.

Je nach Molekulargewicht und Art der ausgewählten Polyolkomponenten können diese Isocyanatumsetzungsprodukte bei Raumtemperatur flüssig oder fest vorliegen. Ebenfalls ist es möglich, dass die isocyanatfunktionellen Prepolymere in inerten organischen Lösemitteln gelöst sind.

Die erfindungsgemäßen isocyanatfunktionellen Prepolymere können als vernetzende Bestandteile direkt in reaktiven PU-Zusammensetzungen eingesetzt werden, beispielsweise in 1K- oder 2K-PU-Zusammensetzungen, oder sie werden in weiteren Reaktionsschritten mit geeigneten Verbindungen umgesetzt, beispielsweise den oben aufgezählten Polyolen, die mit den NCO-Gruppen reagieren können. Solche PU-Prepolymere können dann beispielsweise in den oben erwähnten PU-Zusammensetzungen eingesetzt werden.

Die PU-Zusammensetzungen enthaltend die erfindungsgemäßen isocyanatfunktionellen Prepolymere können noch weitere Additive enthalten. Dabei kann es sich beispielsweise um Katalysatoren, Harze, Lösemittel, Pigmente, Stabilisatoren, Haftvermittler, Farbstoffe, Verlaufsmittel, Weichmacher, Füllstoffe, Thixotropiermittel, Trockenmittel und ähnliche Hilfsstoffe handeln. Diese kann der Fachmann je nach dem Anwendungszweck auswählen.

Als Katalysatoren zur Beschleunigung der Aushärtung eignen sich beispielsweise tertiäre Amine, die nicht in die Prepolymerkette eingebaut werden wie Diazabicyclooctan (Dabco), Triethylamin, Dimethylbenzylamin (Desmorapid^{®} DB, Bayer MaterialScience AG, Leverkusen, DE), Bis-dimethylaminoethylether, Tetramethylguanidin, Bis-dimethylaminomethylphenol, 2,2'- Dimorpholinodiethylether, 2-(2-Dimethylaminoethoxy)ethanol, 2- Dimethylaminoethyl-3dimethylaminopropylether, Bis-(2-dimethylaminoethyl)ether, N,N-Dimethylpiperazin, N-(2-hydroxyethoxyethyl)-2-azanorboran, N,N,N',N'-Tetramethylbutan-1,3-diamin, N,N,N',N'-Tetramethylpropan-1,3-diamin oder N,N,N',N'-Tetramethylhexan-1,6-diamin oder beliebige Gemische mehreren der genannten Verbindungen.

Die Katalysatoren können auch in oligomerisierter oder polymerisierter Form vorliegen, z.B. als N-methyliertes Polyethylenimin.

Als Katalysatoren geeignet sind darüber hinaus 1-Methylimidazol, 2-Methyl-1-vinylimidazol, 1-Allylimidazol, 1-Phenylimidazol, 1,2,4,5- Tetramethylimidazol, 1-(3-Aminopropyl)imidazol, Pyrimidazol, 4-Dimethylamino-pyridin, 4- Pyrrolidinopyridin, 4-Morpholino-pyridin, 4-Methylpyridin oder N-Dodecyl-2-Methyl-imidazol oder beliebige Gemische mehreren der genannten Verbindungen.

Neben oder anstatt der tertiären Amine können auch metallorganische Verbindungen wie Organozinnverbindungen von Carbonsäuren, starke Basen wie Alkalihydroxide, -alkoholate und -phenolate, z.B. Di-n-Octyl-zinn-mercaptid, Dibutylzinnmaleat, -diacetat, -dilaurat, - dichlorid, -bisdodecylmercaptid, Zinn-II-acetat, -ethylhexoat und -diethylhexoat oder Bleiphenyl-ethyl-dithiocarbaminat in solchen feuchtehärtenden PUR-Dichtstoffen enthalten sein.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden.

Als Lösemittel seine beispielhaft Solventnaphtha, Xylol, Ethylacetat, Butylacetat, Methoxypropylacetat und Methylethylketon genannt.

Als Antioxidantien können beispielsweise die handelsüblichen sterisch gehinderten Phenole und/oder Thioether und/oder substituierten Benzotriazole oder die sterisch gehinderten Amine vom Typ des HALS eingesetzt werden.

Als Haftvermittler werden beispielsweise die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

Als geeignete Weichmacher seien beispielhaft Phthalsäureester, Adipinsäureester, Alkylsulfonsäureester des Phenols oder Phosphorsäureester genannt.

Als geeignete Füllstoffe seien beispielhaft Ruß, Fällungskieselsäuren, pyrogene Kieselsäuren, mineralische Kreiden und Fällungskreiden genannt.

Als Thixotropiermittel seien beispielhaft pyrogene Kieselsäuren, Polyamide, hydrierte Rizinusöl-Folgeprodukte oder auch Polyvinylchlorid genannt.

Als Trockenmittel seien beispielhaft Alkoxysilylverbindungen genannt wie Vinyltrimethoxysilan, Methyltrimethoxysilan, i-Butyltrimethoxysilan, Hexadecyltrimethoxysilan, sowie anorganische Stoffe wie z.B. Calciumoxid (CaO) (wirkt ggf. auch als CO₂- Fänger) und Isocyanatgruppen tragende Verbindungen wie z.B. Tosylisocyanat.

Die Erfindung wird nachfolgend durch Beispiele erläutert.

### Beispiele

Sofern nicht abweichend vermerkt beziehen sich alle Prozentangaben auf Gewichtsprozent.

Die Viskositäten wurden bei einer Messtemperatur von 40 °C mit Hilfe des Rheometers Physika MCR 51 der Fa. Anton Paar, Ostfildern, DE bei einer Scherrate von 40 l/s bestimmt.

Die Bestimmung des NCO-Gehalts der Prepolymere bzw. Reaktionsmischungen erfolgte nach DIN EN 1242.

Die Bestimmung des Restmonomergehalts der Prepolymere bzw. Reaktionsmischungen erfolgte mittels Gelpermeationschromatographie (GPC):
Pumpe, Injektor und Brechungsindex-Detektor (RI): Hewlett Packard 1100 Series II; Säulenofen: LaChrom L-7350 (Merck); Trennsäulen: 1 x Nucleogel Vorsäule und 4 x Nucleogel SDV Trennsäulen 300 mm x 7,7 mm; Mobile Phase: Tetrahydrofuran (THF); Flussrate: 0,6 mL/min; Temperatur: 30 °C; Injektionsvolumen: 40 µL; Proben gelöst in THF.

### Polyether A:

Polyetherpolyol mit einer nominellen Funktionalität von 2 und einer Hydroxylzahl von 515 mg KOH/g, hergestellt durch Propoxylierung von Propylenglykol.

### Polyether B:

Polyetherpolyol mit einer nominellen Funktionalität von 2 und einer Hydroxylzahl von 260 mg KOH/g, hergestellt durch Propoxylierung von Propylenglykol.

### Polyether C:

Über DMC-Katalyse nach dem Impact^{®}-Verfahren hergestelltes Polypropylenglykol mit einer nominellen Funktionalität von 2 und einer Hydroxylzahl von ca. 28 mg KOH/g (Acclaim^{®} 4200 bei der Bayer MaterialScience AG, Leverkusen, DE).

### Diisocyanat I:

2,4'-Diphenylmethandiisocyanat mit folgender MDI-Isomeren-Zusammensetzung (Rest: undefinierbare Verunreinigungen):
Mindestens 98 % 2,4'-Diphenylmethandiisocyanat
Maximal 1,5 % 4,4'-Diphenylmethandiisocyanat
Maximal 0,3 % 2,2'-Diphenylmethandiisocyanat

### Beispiel 1 (erfindungsgemäß):

### 1. Stufe: Herstellung des bei Raumtemperatur flüssigen modifizierten 2,4'-MDIs

In einem heiz- und kühlbaren Glaskolben, der mit einem Rührwerk und einem Tropftrichter versehen war, wurden bei einer Temperatur von 80 °C 1279,62 g (5,12 mol) Diisocyanat I aufgeschmolzen. Zum aufgeschmolzenen Diisocyanat wurde unter Rühren 220,38 g (1,01 mol) des zuvor bei einer Temperatur von 120 °C und einem Vakuum von < 20 mbar entwässerten Polyether A so zugegeben, dass die Temperatur in einem Bereich von 80 - 85 °C konstant blieb. Danach wurde die Reaktionsmischung bei 80 °C so lange weitergerührt, bis ein konstanter NCO-Gehalt von 23,0 % (Theorie: 23,0 %) erreicht wurde. Danach wurde das Produkt abgefüllt. Das Produkt der ersten Stufe ist difunktionell und hat eine Urethangruppenkonzentration von 1,35 mol Urethangruppen/kg (Berechnung: 2,02 mol OH-Gruppen des Polyols werden quantitativ in Urethangruppen überführt = 2,02 mol Urethangruppen pro 1500 g Feststoff = 1,35 mol Urethangruppen/kg).

### 2. Stufe: Herstellung des Endprodukts

In einem heiz- und kühlbaren Glaskolben, der mit einem Rührwerk und einem Tropftrichter versehen war, wurden bei einer Temperatur von 80 °C 293,76 g (0,805 mol) des in der 1. Stufe hergestellten Prepolymers vorgelegt. Dazu wurde unter Rühren eine, zuvor bei einer Temperatur von 120 °C und einem Vakuum von < 20 mbar entwässerte, Mischung aus 130,87 g (0,303 mol) Polyether B und 575,37 g (0,144 mol) Polyether C so zugegeben, dass die Temperatur in einem Bereich von 80 - 85 °C konstant blieb. Nach der vollständigen Zugabe der Polyethermischung, wurde die Reaktionsmischung bei 80 °C so lange weitergerührt, bis nach einer Reaktionszeit von 6 Stunden ein konstanter NCO-Gehalt von 3,0 % (Theorie: 3,0 %) erreicht wurde. Das Endprodukt ist difunktionell, hat eine Urethangruppenkonzentration von 1,29 mol Urethangruppen/kg (Berechnung: 293,76 g Prepolymer aus der 1. Stufe enthalten 1,35 x 0,29376 = 0,397 mol Urethangruppen. Die 0,894 mol OH-Gruppen der Polyolmischung werden quantitativ in Urethangruppen überführt = 0,894 mol Urethangruppen. In Summe enthält das Reaktionsprodukt der 2. Stufe 0,397 + 0,894 = 1,29 mol Urethangruppen pro 1000 g Feststoff = 1,29 mol Urethangruppen/kg) und eine Viskosität von 24500 mPas bei 40 °C. Der Restmonomergehalt an freiem Methylendiphenyldiisocyanat beträgt 0,1 %.

### Vergleichsbeispiel 2 (nicht erfindungsgemäß):

### Direkte Herstellung des Endprodukts:

In einem heiz- und kühlbaren Glaskolben, der mit einem Rührwerk und einem Tropftrichter versehen war, wurden bei einer Temperatur von 80 °C 375,75 g (1,503 mol) Diisocyanat I aufgeschmolzen. Zum aufgeschmolzenen Diisocyanat wurde unter Rühren eine, zuvor bei einer Temperatur von 120 °C und einem Vakuum von < 20 mbar entwässerte, Mischung aus 74,73 g (0,343 mol) Polyether A, 175,34 g (0,406 mol) Polyether B und 874,18 g (0,218 mol) Polyether C so zugegeben, dass die Temperatur in einem Bereich von 80 - 85 °C konstant blieb. Nach der vollständigen Zugabe der Polyethermischung, wurde die Reaktionsmischung bei 80 °C so lange weitergerührt, bis nach einer Reaktionszeit von 8 Stunden ein konstanter NCO-Gehalt von 2,9 % (Theorie: 3,0 %) erreicht wurde. Das Endprodukt ist difunktionell, hat eine Urethangruppenkonzentration von 1,29 mol Urethangruppen/kg (Berechnung: 1,934 mol OH-Gruppen der Polyolmischung werden quantitativ in Urethangruppen überführt = 1,934 mol Urethangruppen pro 1500 g Feststoff = 1,29 mol Urethangruppen/kg) und eine Viskosität von 32300 mPas bei 40 °C. Der Restmonomergehalt an freiem Methylendiphenyldiisocyanat beträgt 6,57 %.

### Diskussion der Ergebnisse:

Wie die Beispiele zeigen, weisen die nach dem erfindungsgemäßen zweistufigen Verfahren hergestellten Prepolymere deutlich niedrigere Viskosität auf als Prepolymere mit gleicher Funktionalität und gleicher Urethangruppenkonzentration die direkt, d.h. in einem einstufigen Verfahren hergestellt wurden. Ausserdem weisen die nach dem erfindungsgemäßen zweistufigen Verfahren hergestellten Prepolymere deutlich niedrigere Restmonomergehalte an freiem Methylendiphenyldiisocyanat auf als Prepolymere mit gleicher Funktionalität und gleicher Urethangruppenkonzentration die direkt, d.h. in einem einstufigen Verfahren hergestellt wurden.

## Patentansprüche

1. Verfahren zur Herstellung von niedrigviskosen, reaktive NCO-Endgruppen tragenden 2,4'-MDI basierten Prepolymeren mit einem reduzierten Gehalt an monomeren Diisocyanaten, **dadurch gekennzeichnet, dass** man
A) in einer ersten Synthesestufe ein bei Raumtemperatur flüssiges NCO-terminiertes Prepolymer mit einem NCO-Gehalt > 15 Gew.-% herstellt durch Umsetzung von
a1) 2,4'-MDI mit einem Gehalt von wenigstens 95 Gew.-% des 2,4'-Isomeren mit
a2) mindestens einem Diol mit einer Molmasse von 62 g/mol bis 700 g/mol
oder
einer Mischung aus mono- und/oder di- und/oder höherfunktionellen OH-funktionellen Komponenten, die eine mittlere Funktionalität von ≥ 2,0 und eine zahlenmittlere Molmasse ≤ 700 g/mol aufweist
a3) bei einem Verhältnis von Isocyanatgruppen zu Hydroxylgruppen (Index) von größer 4 zu 1
a4) gegebenenfalls unter Verwendung eines Katalysators und
B) in einer zweiten Synthesestufe direkt oder zu einem späteren Zeitpunkt das
b1) in der ersten Synthesestufe A) hergestellte bei Raumtemperatur flüssige Prepolymer mit
b2) weiteren Polyolen
zum reaktive NCO-Endgruppen tragenden Polyurethan mit einem reduzierten Anteil an monomeren Diisocyanaten mit gleichzeitig reduzierter Viskosität umgesetzt wird.

2. Verfahren gemäß Anspruch 1, **dadurch gekennzeichnet, dass** das in der ersten Synthesestufe (A) verwendete 2,4'-MDI (a1) einen Gehalt an 2,4'-Isomeren von größer 95 Gew.-% aufweist.

3. Verfahren gemäß Anspruch 1, **dadurch gekennzeichnet, dass** das in der ersten Synthesestufe (A) verwendete 2,4'-MDI (a1) einen Gehalt an 2,4'-Isomeren von größer 97 Gew.-% aufweist.

4. Verfahren gemäß Anspruch 1, **dadurch gekennzeichnet, dass** das in der ersten Synthesestufe (A) verwendete 2,4'-MDI (a1) einen Gehalt an 2,4'-Isomeren von größer 98 Gew.-% aufweist.

5. Verfahren gemäß Anspruch 1, **dadurch gekennzeichnet, dass** das in der ersten Synthesestufe (A) verwendete 2,4'-MDI (a1) einen Gehalt des 2,2'-Isomeren von kleiner 1 Gew.-% aufweist.

6. Verfahren gemäß Anspruch 1, **dadurch gekennzeichnet, dass** das in der ersten Synthesestufe (A) verwendete 2,4'-MDI (a1) einen Gehalt des 2,2'-Isomeren von kleiner 0,5 Gew.-% aufweist.

7. Verfahren gemäß Anspruch 1, **dadurch gekennzeichnet, dass** das in der ersten Synthesestufe (A) verwendete 2,4'-MDI (a1) einen Gehalt des 2,2'-Isomeren von kleiner 0,3 Gew.-% aufweist.

8. Verfahren gemäß Ansprüchen 1 bis 7, **dadurch gekennzeichnet, dass** als Diol (a2) in der ersten Synthesestufe (A) difunktionelle Alkohole ausgewählt aus der Gruppe bestehend aus Ethylenglykol, 1,2-Propandiol, 1,3-Propandiol, 1,2-Butandiol, 1,3-Butandiol, 1,4-Butandiol und/oder Triproylenglykol eingesetzt werden.

9. Verfahren gemäß Ansprüchen 1 bis 8, **dadurch gekennzeichnet, dass** als Diol (a2) in der ersten Synthesestufe (A) als difunktioneller Alkohol Tripropylenglykol eingesetzt wird.

10. Verfahren gemäß Ansprüchen 1 bis 9, **dadurch gekennzeichnet, dass** die in der ersten Synthesestufe (A) verwendeten difunktionellen Polyether (a2) Molmassen kleiner 700 g/mol, bevorzugt kleiner 500 g/mol und besonders bevorzugt von 200 bis 300 g/mol aufweisen.

11. Verfahren gemäß Ansprüchen 1 bis 10, **dadurch gekennzeichnet, dass** in der zweiten Synthesestufe (B) als Polyole (b2) auf Startern ausgewählt aus der Gruppe bestehend aus Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, und/oder Sorbit basierende Polyether mit Propylenoxid-, Ethylenoxid- und/oder Tetrahydrofuran-Einheiten verwendet werden.

12. Verfahren gemäß Ansprüchen 1 bis 11, **dadurch gekennzeichnet, dass** die zweite Synthesestufe (B) bei Reaktionstemperaturen von 120 - 180 °C, bevorzugt 130 - 150 °C, durchgeführt wird.

13. Verwendung von gemäß Ansprüchen 1 bis 12 erhältlichen Prepolymeren als vernetzende Bestandteile bei der Herstellung von reaktiven ein- und zweikomponentigen Kleb/- Dichtstoffen, reaktiven Schmelzklebstoffen, Montageschäumen, Vergussmassen sowie Weich-, Hart- und Integralschäumen.

## Claims

1. A method for the production of low-viscosity 2,4'-MDI based prepolymers carrying reactive NCO end groups having a reduced content of monomeric diisocyanates, **characterised in that**
A) in a first synthesis step an NCO-terminated prepolymer which is liquid at ambient temperature having an NCO content > 15 wt.% is produced by reaction of
a1) 2,4'-MDI having a content of at least 95 wt.% of the 2,4' isomer with
a2) at least one diol having a molar mass of 62 g/mol to 700 g/mol
or
a mixture of mono- and/or di- and/or polyfunctional OH-functional components having an average functionality of ≥ 2.0 and a number average molar mass ≤ 700 g/mol
a3) in a ratio of isocyanate groups to hydroxyl groups (index) of greater than 4:1
a4) optionally using a catalyst and
B) in a second synthesis step, directly or at a later point in time, the
b1) prepolymer produced in the first synthesis step A), which is liquid at ambient temperature, is reacted with
b2) other polyols
to form the polyurethane carrying reactive NCO end groups having a reduced content of monomeric diisocyanates with, at the same time, reduced viscosity.

2. The method according to claim 1, **characterised in that** the 2,4'-MDI (a1) used in the first synthesis step (A) has a content of 2,4'-isomer greater than 95 wt.%.

3. The method according to claim 1, **characterised in that** the 2,4'-MDI (a1) used in the first synthesis step (A) has a content of 2,4'-isomer greater than 97 wt.%.

4. The method according to claim 1, **characterised in that** the 2,4'-MDI (a1) used in the first synthesis step (A) has a content of 2,4'-isomer greater than 98 wt.%.

5. The method according to claim 1, **characterised in that** the 2,4'-MDI (a1) used in the first synthesis step (A) has a content of the 2,2'-isomer of less than 1 wt.%.

6. The method according to claim 1, **characterised in that** the 2,4'-MDI (a1) used in the first synthesis step (A) has a content of the 2,2'-isomer of less than 0.5 wt.%.

7. The method according to claim 1, **characterised in that** the 2,4'-MDI (a1) used in the first synthesis step (A) has a content of the 2,2'-isomer of less than 0.3 wt.%.

8. The method according to claims 1 to 7, **characterised in that** as diol (a2) in the first synthesis step (A), difunctional alcohols selected from the group consisting of ethylene glycol, 1,2-propanediol, 1,3-propanediol, 1,2-butanediol, 1,3-butanediol, 1,4-butanediol and/or tripropylene glycol are used.

9. The method according to claims 1 to 8, **characterised in that** as diol (a2) in the first synthesis step (A), tripropylene glycol is used as difunctional alcohol.

10. The method according to claims 1 to 9, **characterised in that** the difunctional polyethers (a2) used in the first synthesis step (A) have molar masses of less than 700 g/mol, preferably less than 500 g/mol and particularly preferably of 200 to 300 g/mol.

11. The method according to claims 1 to 10, **characterised in that** in the second synthesis step (B), polyethers based on starters selected from the group consisting of water, ethylene glycol, 1,2- or 1,3-propylene glycol, 1,3-butanediol, 1,4-butanediol, 1,6-hexanediol, bisphenol A, neopentyl glycol, glycerol, trimethylolpropane, pentaerythritol and/or sorbitol with propylene oxide, ethylene oxide and/or tetrahydrofuran units are used as polyols (b2).

12. The method according to claims 1 to 11, **characterised in that** the second synthesis step (B) is carried out at reaction temperatures of 120 - 180°C, preferably 130 - 150°C.

13. Use of prepolymers obtainable according to claims 1 to 12 as crosslinking components in the production of reactive one- and two-component adhesives/sealants, reactive hot-melt adhesives, bonding foams, encapsulating compounds and flexible, rigid and structural foams.

## Revendications

1. Procédé pour la préparation de prépolymères peu visqueux à base de 2,4'-MDI, portant des groupes terminaux NCO réactifs, ayant une teneur réduite en diisocyanates monomères, **caractérisé en ce que**
A) dans une première étape de synthèse on fait réagir un prépolymère à terminaison NCO, liquide à la température ambiante, ayant une teneur en NCO > 15 % en poids, préparé par mise en réaction de
a1) 2,4'-MDI ayant une teneur d'au moins 95 % en poids en l'isomère 2,4', avec
a2) au moins un diol ayant une masse molaire de 62 g/mole à 700 g/mole
ou
un mélange de composants à fonction OH, monofonctionnels et/ou bifonctionnels et/ou à plus haute fonctionnalité, qui présente une fonctionnalité moyenne de ≥ 2,0 et une masse molaire moyenne en nombre ≤ 700 g/mole
a3) à un rapport des groupes isocyanate aux groupes hydroxy (indice) supérieur à 4:1
a4) éventuellement avec utilisation d'un catalyseur et
B) dans une deuxième étape de synthèse on fait réagir, immédiatement ou à un moment ultérieur
b1) le prépolymère liquide à la température ambiante, préparé dans la première étape de synthèse A), avec
b2) d'autres polyols
pour aboutir au polyuréthane portant des groupes terminaux NCO réactifs, ayant une teneur réduite en diisocyanates monomères à viscosité en même temps réduite.

2. Procédé selon la revendication 1, **caractérisé en ce que** le 2,4'-MDI (a1) utilisé dans la première étape de synthèse (A) présente une teneur en isomère 2,4' supérieure à 95 % en poids.

3. Procédé selon la revendication 1, **caractérisé en ce que** le 2,4'-MDI (a1) utilisé dans la première étape de synthèse (A) présente une teneur en isomère 2,4' supérieure à 97 % en poids.

4. Procédé selon la revendication 1, **caractérisé en ce que** le 2,4'-MDI (a1) utilisé dans la première étape de synthèse (A) présente une teneur en isomère 2,4' supérieure à 98 % en poids.

5. Procédé selon la revendication 1, **caractérisé en ce que** le 2,4'-MDI (a1) utilisé dans la première étape de synthèse (A) présente une teneur en l'isomère 2,2' inférieure à 1 % en poids.

6. Procédé selon la revendication 1, **caractérisé en ce que** le 2,4'-MDI (a1) utilisé dans la première étape de synthèse (A) présente une teneur en l'isomère 2,2' inférieure à 0,5 % en poids.

7. Procédé selon la revendication 1, **caractérisé en ce que** le 2,4'-MDI (a1) utilisé dans la première étape de synthèse (A) présente une teneur en l'isomère 2,2' inférieure à 0,3 % en poids.

8. Procédé selon l'une quelconque des revendications 1 à 7, **caractérisé en ce qu'**on utilise comme diol (a2) dans la première étape de synthèse (A) des alcools bifonctionnels choisis dans le groupe constitué par l'éthylèneglycol, le 1,2-propanediol, le 1,3-propanediol, le 1,2-butanediol, le 1,3-butanediol, le 1,4-butanediol et/ou le tripropylèneglycol.

9. Procédé selon l'une quelconque des revendications 1 à 8, **caractérisé en ce qu'**on utilise comme diol (a2) dans la première étape de synthèse (A), en tant qu'alcool bifonctionnel, le tripropylèneglycol.

10. Procédé selon l'une quelconque des revendications 1 à 9, **caractérisé en ce que** les polyéther bifonctionnels (a2) utilisés dans la première étape de synthèse (A) présentent des masses molaires inférieures à 700 g/mole, de préférence inférieures à 500 g/mole et de façon particulièrement préférée de 200 à 300 g/mole.

11. Procédé selon l'une quelconque des revendications 1 à 10, **caractérisé en ce que** dans la deuxième étape de synthèse (B) on utilise comme polyols (b2) des polyéthers comportant des motifs oxyde de propylène, oxyde d'éthylène et/ou tétrahydrofurane, à base de composés de départ choisis dans le groupe constitué par l'eau, l'éthylèneglycol, le 1,2- ou 1,3-propylèneglycol, le 1,3-butanediol, le 1,4-butanediol, le 1,6-hexanediol, le bisphénol A, le néopentylglycol, le glycérol, le triméthylolpropane, le pentaérythritol et/ou le sorbitol.

12. Procédé selon les revendications 1 à 11, **caractérisé en ce qu'**on effectue la deuxième étape de synthèse (B) à des températures de réaction de 120 - 180 °C, de préférence de 130 - 150 °C.

13. Utilisation de prépolymères pouvant être obtenus selon les revendications 1 à 12, en tant que composants de réticulation dans la production de matières adhésives/d'étanchéité réactives mono- ou bicomposants, d'adhésifs fusibles réactifs, de mousses de montage, de matières à couler ainsi que de mousses souples, rigides et intégrales.
